# EUROPÄISCHE PATENTSCHRIFT

(11) **EP 0 386 510 B1**
(45) Veröffentlichungstag und Bekanntmachung des Hinweises auf die Patenterteilung: **10.02.1993**
(21) Anmeldenummer: 90103099.9
(22) Anmeldetag: 17.02.1990
(51) Int. Cl.: B01D 29/01, B01D 29/64

(54) **Filtervorrichtung mit Rührwerk**
Filtering device comprising a rotating system
Dispositif filtrant pourvu d'un système rotatif

(30) Priorität: 04.03.1989 DE 3907040
(43) Veröffentlichungstag der Anmeldung: 12.09.1990
(73) Patentinhaber: BAYER AG, 51368 Leverkusen (DE)
(72) Erfinder: Hetzel, Hartmut, Dr., D-5000 Köln 40 (DE)

(56) Entgegenhaltungen:
- CH-A- 600 928
- GB-A- 771 253
- US-A- 2 238 024

## Beschreibung

Die Erfindung betrifft eine Filtervorrichtung mit Rührwerk, bestehend aus einer waagerechten Filterplatte mit einer zentrischen Austragsöffnung und einer senkrecht und zentrisch zur Filterplatte angeordneten Rührwelle, welche zwei Rührbalkenarme trägt, wobei an den Rührbalkenarmen zur Filterplatte weisende, unter einem Winkel zu ihrem Umlaufkreis angestellte Rührschaufeln angeordnet sind.

Filtervorrichtungen dieser Art, auch unter dem Namen Rührwerksnutschen bekannt, werden für die Verfahrensschritte Filtern - Waschen (Suspendieren) - Trocknen -Austragen verwendet. Dabei kommt dem Rührwerk entscheidende Bedeutung zu: Nach dem Filtrieren hat es die Aufgabe, für den Waschvorgang den Filterkuchen im Waschmittel zu suspendieren, für das Trocknen den gewaschenen Filterkuchen fein zu verteilen und für einen guten Stoff- und Wärmeaustausch mit der beheizten Behälterwand zu sorgen sowie zum Austragen den Feststoff möglichst vollständig aus der Nutsche auszuräumen. Besonders problematisch ist das Aufrühren des festen Filterkuchens, da dieser dem Rührer einen sehr hohen Widerstand entgegensetzt.

Es werden daher Rührwerke eingesetzt, die z.B. durch eine zusätzliche Hubbewegung sicherstellen, daß die Rührschaufeln nur nach und nach in den Filterkuchen eintauchen. Solche Rührwerke sind recht aufwendig, und insbesondere ist die Abdichtung der Rührwelle problematisch.

Aus CH-A-600 928 ist eine Filtervorrichtung bekannt, über deren horizontaler Filterplatte zein absenkbares Rührwerk mit senkrechter Rührwelle und waagerechten Rührarmen angeordnet ist, wobei an den Rührarmen angeordnete Rührschaufeln für die Austragsfunktion einen Anstellwinkel um 45° und zum Glätten des Filterkuchens einen Anstellwinkel um 15° aufweisen.

Es besteht die Aufgabe, die eingangs genannte Filtervorrichtung so zu verbessern, daß für das Rührwerk nur eine rotierende Dichtung erforderlich ist und trotzdem die Rührschaufeln nur nach und nach auf den Filterkuchen einwirken.

Diese Aufgabe wird dadurch gelöst, daß die Rührschaufeln durch den Widerstand des auf der Filterplatte befindlichen Filterkuchens aus ihrer einen Winkel zu ihrem Umlaufkreis aufweisenden Normalstellung in die zu ihrem Umlaufkreis tangentiale Stelung bewegbar sind und durch die zunehmende Auflockerung de Filterkuchens wieder in die Normalstellung zurück bewegbar sind.

Gemäß einer besonderen Ausführungsform wird diese Bewegbarkeit dadurch bewirkt, daß die Rührschaufeln um Bolzen schwenkbar am Rührbalken arm gelagert sind und entgegen der Krafteinwirkung des Filterkuchens unter Federkraft stehen.

Dadurch wird erreicht, daß beim Anlaufen des Rührwerkes die in den festen Filterkuchen eingetauchen Rührschaufeln gegen die Federkraft in die tangentiale Stellung gedrückt werden und dadurch einen geringen Widerstand bieten. Mit zunehmender Auflockerung des Filterkuchens überwiegt dann die Federkraft dessen Widerstand und die Rührschaufeln werden wieder förderaktiv, wobei sie zum Waschen und Trocknen nach außen fördern und zum Austragen durch Umkehr der Drehrichtung nach innen zur zentralen Austragsöffnung.

Gemäß einer anderen Ausführungsform bestehen die Rührschaufeln aus verschleißfestem, elastischem Material und sind in ihrer einen Winkel zu ihrem Umlaufkreis aufweisenden Normalstellung mittels Bolzen fest gelagert.

Hier geschieht das gleiche wie bei der ersten Ausführungsform, wobei jedoch anstelle der Federkraft die Elastizität der Rührschaufeln wirksam wird, dank welcher die Rührschaufeln durch den Widerstand des Filterkuchens derart verformt werden, daß sie die tangentiale Stellung einnehmen.

In der Zeichnung ist die neue Filtervorrichtung gemäß den beiden Ausführungsformen rein schematisch dargestellt und nachstehend näher erläutert. Es zeigen jeweils in der Draufsicht:
Fig. 1 die Filtervorrichtung gemäß erster Ausführungsform mit den Rührschaufeln in forderaktiver Stellung,
Fig. 2 die Filtervorrichtung gemäß Fig. 1 mit den Rührschaufeln in neutraler Stellung,
Fig. 3 die Filtervorrichtung gemäß zweiter Ausführungsform mit den Rührschaufeln in förderaktiver Stellung und
Fig. 4 die Filtervorrichtung gemäß Fig. 3 mit den Rührschaufeln in neutraler Stellung.

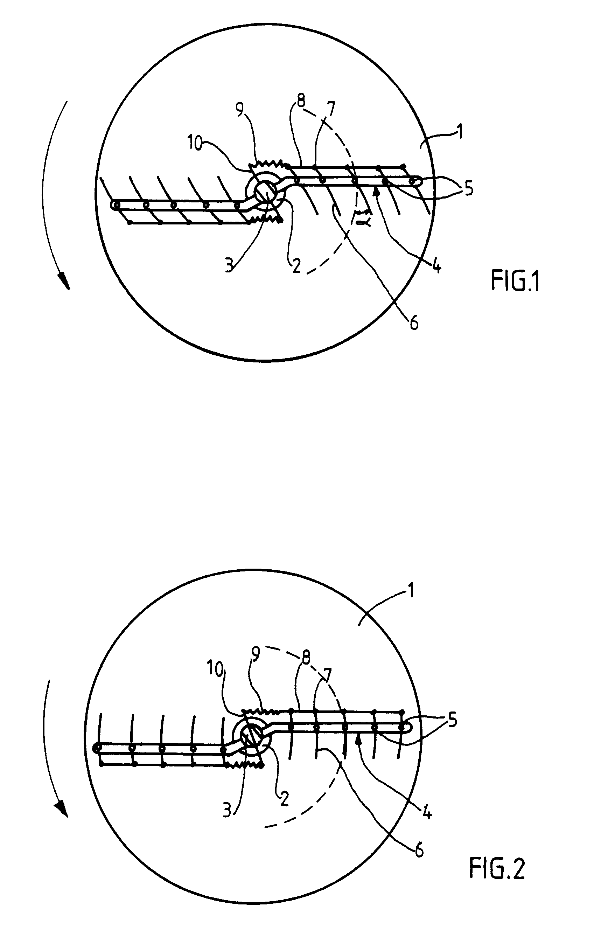

In Fig. 1, 2 besteht die Filtervorrichtung aus einer scheibenartigen Filterplatte 1, welche eine zentrale Austragsöffnung 2 aufweist. Oberhalb dieser Austragsöffnung 2 ist eine Rührwelle 3 angebracht, welche zwei Rührbalkenarme 4 trägt. An diesen sind in gleichmäßigen Abständen zur Filterplatte 1 weisende Bolzen 5 angeordnet, an denen Rührschaufeln 6 gehalten sind. Die kürzeren Enden der Rührschaufeln 6 der Rührbalkenarme 4 sind mittels Zapfen 7 in einer Zugstange 8 gelagert, welche mittels einer Feder 9 an einer an der Rührwelle 3 angeordneten Traverse 10 befestigt sind. Die Federn 9 weisen eine Kraft auf, welche geringer ist als jene, welche der feste Filterkuchen auf die Rührschaufeln 6 ausübt, aber größer ist als jene des gut aufgelockerten Filterkuchens.

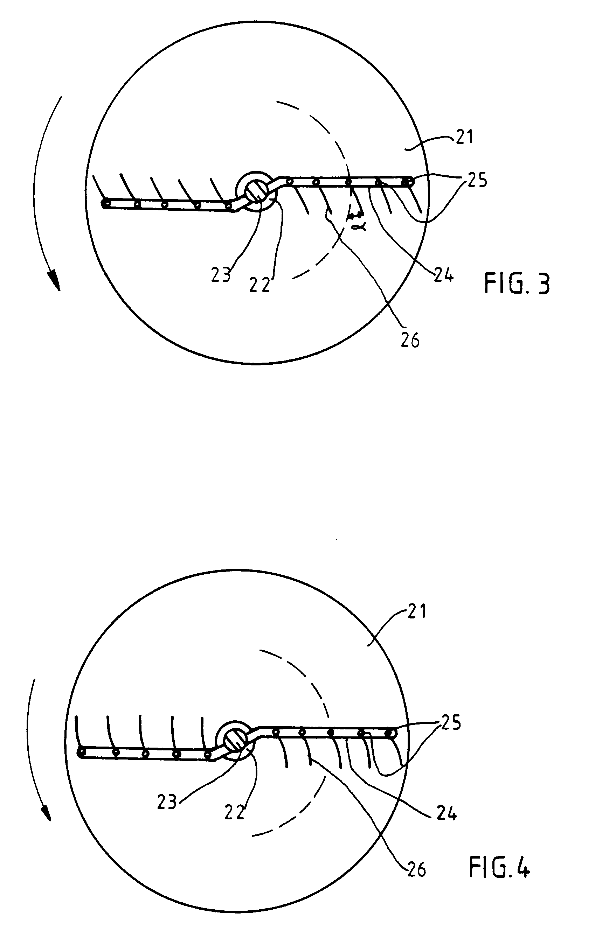

In Fig. 3, 4 besteht die Filtervorrichtung aus einer scheibenförmigen Filterplatte 21, welche eine zentrale Austragsöffnung 22 aufweist. Oberhalb dieser Austragsöffnung 22 ist eine Rührwelle 23 angebracht, welche zwei Rührbalkenarme 24 trägt. An diesen sind in gleichmäßigen Abständen zur Filterplatte 21 weisende Bolzen 25 angeordnet, an denen Rührschaufeln 26 gehalten sind. Diese bestehen aus Federstahl oder z.B. einem Polyur ethanelastomer, welches sich durch hohe Verschleißfestigkeit und entsprechende Elastizität auszeichnet. Die Verformbarkeit der Rührschaufeln 26 ist so bemessen, daß sie größer ist als jene Kraft, welche der feste Filterkuchen auf die Rührschaufeln 26 ausübt, aber geringer als die Widerstandskraft des gut aufgelockerten Filterkuchens.

Die Arbeitsweise der Filtervorrichtung gemäß Fig. 1, 2 ist folgende:
Im festen Filterkuchen nehmen die Rührschaufeln 6 die in Fig. 1 gezeigte Normalstellung mit dem Winkel α zum Umlaufkreis ein. Beginnt nun das Rührwerk zu arbeiten, und zwar mit Drehrichtung nach links, so werden die Rührschaufeln 6 in die neutrale, zum Umlaufkreis tangentiale Stellung gemäß Fig. 2 gedrückt, weil die vom festen Filterkuchen ausgeübte Kraft größer als die auf die Rührschaufeln 6 einwirkende Federkraft ist. Mit zunehmender Auflockerung des Filterkuchens nimmt dessen einwirkende Kraft ab, so daß schließlich die Federkraft überwiegt und die Rührschaufeln 6 förderaktiv werden, indem sie wieder die Stellung gemäß Fig. 1 einnehmen. Dabei wird der Filterkuchen nach außen gefördert. Zum Austragen der Filterkuchenmasse wird die Drehrichtung gewechselt, wobei die Rührschaufeln 6 die Stellung gemäß Fig. 1 beibehalten; sie fördern jedoch nach innen zur Austragsöffnung 2 hin.

Die Arbeitsweise der Filtervorrichtung gemäß Fig. 3, 4 ist folgende:
Im festen Filterkuchen nehmen die Rührschaufeln 26 die in Fig. 3 gezeigte Normalstellung mit dem Winkel α zum Umlaufkreis ein. Beginnt nun das Rührwerk zu arbeiten, und zwar mit Drehrichtung nach links, so werden die Rührschaufeln 26 in die neutrale, zum Umlaufkreis tangentiale Stellung gemäß Fig. 4 verformt, weil die vom festen Filterkuchen ausgeübte Kraft größer ist als der Verformungswiderstand der Rührschaufeln 26. Mit zunehmender Auflockerung des Filterkuchens nimmt dessen einwirkende Kraft ab, so daß schließlich der Verformungswiderstand der Rührschaufeln 26 überwiegt und die Rührschaufeln 26 förderaktiv werden, indem sie wieder die Stellung gemäß Fig. 3 einnehmen. Dabei wird der Filterkuchen nach außen gefordert. Zum Austragen der Filterkuchenmasse wird die Drehrichtung gewechselt, wobei die Rührschaufeln 26 die Stellung gemäß Fig. 3 beibehalten; sie fördern jedoch nach innen zur Austragsöffnung 22 hin, wobei eine Änderung des Anstellungswinkels α durch einen Anschlag am hinteren Schaufelende verhindert wird.

## Patentansprüche

1. Filtervorrichtung mit Rührwerk, bestehend aus einer waagerechten Filterplatte (1, 21) mit einer zentrischen Austragsöffnung (2, 22) und einer senkrecht und zentrisch zur Filterplatte (1, 21) angeordneten Rührwelle (3, 23), welche zwei Rührbalkenarme (4, 24) trägt, wobei an den Rührbalkenarmen (4, 24) zur Filterplatte (1, 21) weisende, unter einem Winkel zu ihrem Umlaufkreis angestellte Rührschaufeln (6, 26) angeordnet sind, dadurch gekennzeichnet, daß die Rührschaufeln (6, 26) durch den Widerstand des auf der Filterplatte (1, 21) befindlichen Filterkuchens aus ihrer einen Winkel zu ihrem Umlaufkreis aufweisenden Normalstellung in die zu ihrem Umlaufkreis tangentiale Stellung bewegbar sind und durch die zunehmende Auflockerung des Filterkuchens wieder in die Normalstellung zurückbewegbar sind.

2. Filtervorrichtung nach Anspruch 1, dadurch gekennzeichnet, daß diese Bewegbarkeit dadurch bewirkt wird, daß die Rührschaufeln (6) um Bolzen (5) schwenkbar am Rührbalken arm (4) gelagert sind und entgegen der Krafteinwirkung des Filterkuchens unter Federkraft stehen.

3. Filtervorrichtung nach Anspruch 1, dadurch gekennzeichnet, daß die Rührschaufeln (26) aus verschleißfestem, elastischem Material bestehen und in ihrer einen Winkel zu ihrem Umlaufkreis aufweisenden Normalstellung mittels Bolzen (25) fest gelagert sind.

## Claims

1. A filter device with an agitator, comprising a horizontal filter plate (1, 21) which possesses a central discharge opening (2, 22) and an agitator shaft (3, 23) which is disposed perpendicularly and centrally with respect to the filter plate (1, 21) and which bears two straight agitator arms (4, 24), wherein agitator blades (6, 26), which are directed towards the filter plate (1, 21) and are adjusted at an angle relative to the periphery of said filter plate (1, 21), are arranged on the straight agitator arms (4, 24), characterised in that by virtue of the resistance of the filter cake located on the filter plate (1, 21) the agitator blades (6, 26) can be moved from their normal position, in which they are directed at an angle with respect to the periphery of said filter plate, into the position tangential to the periphery of said filter plate, and by virtue of the progressive breaking up of the filter cake can be moved back into the normal position.

2. A filter device as claimed in Claim 1, characterised in that this mobility is achieved in that the agitator blades (6) are mounted on the straight agitator arm (4) so as to be pivotable about pins (5) and are subject to spring force against the force of the filter cake.

3. A filter device as claimed in Claim 1, characterised in that the agitator blades (26) are composed of wear-resistant, elastic material and are fixed by means of pins (25) in their normal position in which they are directed at an angle with respect to the periphery.

## Revendications

1. Dispositif de filtration à agitateur, constitué d'un plateau de filtration (1, 21) horizontal à ouverture centrale d'extraction (2, 22), et d'un arbre d'agitateur (3, 23) vertical disposé au centre du plateau de filtration (1, 21) et portant deux bras d'agitateur (4, 24) sur lesquels sont disposées des aubes d'agitateur (6, 26) tournées vers le plateau de filtration (1, 21) et orientées obliquement par rapport à leur cercle de rotation, caractérisé en ce que les aubes d'agitateur (6, 26) sont déplaçables par la résistance du gâteau de filtration se trouvant sur le plateau de filtration (1, 21) depuis leur position normale formant un angle par rapport à leur cercle de rotation jusqu'à une position tangentielle à leur cercle de rotation, et peuvent revenir à nouveau en leur position normale suite à la désagrégation croissante du gâteau de filtration.

2. Dispositif de filtration selon la revendication 1, caractérisé en ce que cette mobilité est obtenue par le fait que les aubes d'agitation (6) sont fixées sur les bras d'agitateur (4) à pivotement autour de boulons (5) et résistent à l'effet de la force du gâteau de filtration par l'action d'une force de ressort.

3. Dispositif de filtration selon la revendication 1, caractérisé en ce que les aubes d'agitation (26) sont constituées d'un matériau élastique résistant à l'usure et sont fixées de manière fixe en leur position normale formant un angle par rapport à leur cercle de rotation à l'aide de boulons (25).
